# EUROPEAN PATENT SPECIFICATION

(11) **EP 3 163 833 B1**
(45) Date of publication and mention of the grant of the patent: **18.03.2020**
(21) Application number: 15829052.8
(22) Date of filing: 04.02.2015
(51) Int. Cl.: H04L 29/06

(54) **VIRTUAL PRIVATE NETWORK REALIZATION METHOD AND CLIENT DEVICE**
VERFAHREN ZUR REALISIERUNG EINES VIRTUELLEN PRIVATEN NETZWERKS UND CLIENT-VORRICHTUNG
PROCÉDÉ DE RÉALISATION DE RÉSEAU PRIVÉ VIRTUEL ET DISPOSITIF CLIENT

(30) Priority: 08.08.2014 CN 201410388867
(43) Date of publication of application: 03.05.2017
(73) Proprietor: Huawei Technologies Co., Ltd., Longgang District Shenzhen, Guangdong 518129 (CN)
(72) Inventor: ZHENG, Xiaofeng, Shenzhen Guangdong 518129 (CN); ZHU, Yinghua, Shenzhen Guangdong 518129 (CN); GE, Tingke, Shenzhen Guangdong 518129 (CN); ZHAO, Fei, Shenzhen Guangdong 518129 (CN)
(74) Representative: Goddar, Heinz J.
(86) International application number: PCT/CN2015/072246
(87) International publication number: WO 2016/019717

(56) References cited:
- EP-A1- 2 590 368
- CN-A- 101 072 108
- CN-A- 102 065 059
- CN-A- 102 065 125
- US-A1- 2006 031 407
- US-A1- 2010 161 960
- US-A1- 2012 303 949
- US-A1- 2013 128 892
- US-A1- 2013 297 814

## Description

### TECHNICAL FIELD

Embodiments of the present invention relate to computer technologies, and in particular, to a virtual private network implementation method and a client device.

### BACKGROUND

A virtual private network (Virtual Private Network, VPN for short) is a secure and stable tunnel passing through a public network. A temporary and secure connection is established on a public network by transmitting network data obtained after encapsulation and encryption. Therefore, transmission of private data on the public network can reach a security level of a private network. Two commonly used VPN technologies are separately a VPN technology based on a conventional network security protocol and a VPN over Secure Sockets Layer (Security Sockets Layer, SSL for short) technology. The former is mainly applied to a network layer, and the latter is mainly applied to an application layer. An SSL VPN is a VPN technology based on the SSL. The SSL VPN uses a certificate-based mechanism that is of identity authentication, data encryption, and message integrity check and that is provided by the SSL protocol, to ensure that a user remotely accesses an internal network of a company (hereinafter referred to as the intranet) in a secure manner. The SSL VPN may be used in multiple manners, and a layer 3 SSL VPN is used most widely. Network drivers include a Transport Driver Interface (Transport Driver Interface, TDI for short) driver and a Network Driver Interface Specification (Network Driver Interface Specification, NDIS for short) driver. The NDIS driver may be further divided into a protocol driver, an intermediate driver, and a network interface card driver. The layer 3 SSL VPN requires client software to be installed. After an SSL VPN client (hereinafter referred to as the client) is started to log in to an SSL VPN gateway (hereinafter referred to as the gateway), the client and the gateway establish an SSL tunnel. The client applies to the gateway for a virtual IP address, and the client configures a user operating system, so that an application program in the system can access an intranet server by using the virtual IP address. The client intercepts a packet using the virtual IP address, and forwards the intercepted packet to the gateway by using the previously established SSL tunnel. The gateway forwards the packet to the intranet server.

In the prior art, a new virtual network interface card is established in a user operating system when a client is installed, and the virtual network interface card is normally in a disabled state. When the client is started to log in to a gateway, the client obtains a virtual IP address from the gateway through application. The client starts the virtual network interface card, and sets the obtained virtual IP address through application as an address of the virtual network interface card. When a process accesses the intranet server by using the virtual network interface card, data sent by the application program is sent downwards through a driver stack. When the data is finally sent to the virtual network interface card, the virtual network interface card receives a packet delivered by an upper-layer, and submits the packet to the client. The client sends the packet to the gateway by using the SSL tunnel established during login, and the gateway forwards the packet to the intranet server.

Problems in the prior art are as follows: Because all processes in a system can use a virtual network interface card, and access an intranet server, there is no way to limit access of some processes; and because the virtual network interface card also needs to be started when a client is started, the client has a slow startup speed.

US 2013/0128892 A1 describes a method for routing packets from a gateway to an endpoint. The method includes the step of associating a private internet protocol (IP) address with an endpoint having a public IP address. A packet addressed to the private IP address of the endpoint is captured. A policy is applied to the packet. The packet is transmitted to the public IP address of the endpoint, responsive to the application of the policy to the packet.

EP 2 590 368A1 discloses a method, an apparatus, and a network system for a terminal to traverse a private network to communicate with a server in an IMS core network. The method for a terminal to traverse a private network to communicate with a server in an IMS core network includes: setting, by the terminal, a source address of service data to be sent as a virtual IP address, setting a destination address of the service data to be sent as an address of an internal network server, and obtaining a first service packet, where the virtual IP address is an address allocated by the multimedia subsystem IMS core network to the terminal; and encapsulating, by the terminal, the first service packet into a first tunnel packet, and send the first tunnel packet to the security tunnel gateway over a virtual private network tunnel (VPN) between the terminal and a security tunnel gateway, so that the security tunnel gateway sends the first service packet in the first tunnel packet to the internal network server.

### SUMMARY

Embodiments of the present invention provide a virtual private network implementation method and a client device to resolve problems in the prior art that access of a process cannot be controlled, and a client has a slow startup speed because a virtual network interface card also needs to be started when the client is started. According to a first aspect, an embodiment of the present invention provides a virtual private network implementation method, where the method is applied to a virtual private network over Secure Sockets Layer SSL VPN, the SSL VPN includes: a client device, a gateway, and an intranet server of the SSL VPN, the client device communicates with the intranet server by using the gateway, the client device includes a Transport Driver Interface TDI driver, a Network Driver Interface Specification NDIS protocol driver, a Network Driver Interface Specification NDIS intermediate driver, a Network Driver Interface Specification NDIS network interface card driver, and a client, and the method includes:
intercepting, by the NDIS intermediate driver, a packet sent by an application program to the intranet server, obtaining a protocol type and a port number of the packet, determining according to the protocol type and the port number, and a mapping relationship from the TDI driver, a process identification, PID of a process corresponding to the packet, wherein the mapping relationship comprises the protocol type, the port number and the PID, and determining, according to the PID and a PID table of processes that are allowed to use the SSL VPN, whether to allow the process corresponding to the packet to use the SSL VPN, wherein the PID table comprises PIDs of processes that are allowed to use the SSL VPN;
if the process corresponding to the packet is allowed to use the SSL VPN, establishing, by the NDIS intermediate driver, a new packet, setting a destination address of the new packet as a local address of the client device setting a destination port number of the new packet as a port number on which the client receives the packet, changing a source Internet Protocol (IP) address of the packet to a virtual Internet Protocol IP address, using the packet as a payload of the new packet, and submitting the new packet to the NDIS network interface card driver, where the virtual IP address is a virtual Internet Protocol IP address obtained from the gateway after the client and the gateway establish a Secure Sockets Layer SSL tunnel; and
sending, by the NDIS network interface card driver, the new packet to the client, and sending, by the client, the new packet to the intranet server.

With reference to the first aspect, in a first implementation manner of the first aspect, before the intercepting, by the NDIS intermediate driver, a packet sent by an application program to the intranet server, the method further includes:
obtaining, by the TDI driver, information about a packet flow for sending the packet, where the information includes the protocol type, the port number, and the process identification PID; notifying the NDIS intermediate driver of the information; and
storing, by the NDIS intermediate driver, the mapping relationship.

With reference to the first aspect, or the first implementation manner of the first aspect, in a second implementation manner of the first aspect, before the determining whether to allow a process corresponding to the packet to use the SSL VPN, the method further includes:
setting, in the PID table by the client, the PID indicating whether to allow the process corresponding to the packet to use the SSL VPN.

With reference to any one of the first aspect, and the first and second implementation manners of the first aspect, in a third implementation manner of the first aspect, the method further includes:
receiving, by the client, a packet from the intranet server that is forwarded by the gateway, changing a destination address of the packet to the local address of the client device on which the client is located, sending the packet to the NDIS protocol driver by using a raw socket (Raw Socket) interface, and forwarding, by the NDIS protocol driver, the packet to a corresponding application program.

According to a second aspect, an embodiment of the present invention provides a client device applied to a virtual private network over Secure Sockets Layer SSL VPN, where the SSL VPN includes: a client device, a gateway, and an intranet server of the SSL VPN, the client device communicates with the intranet server by using the gateway, and the client device includes a Transport Driver Interface TDI driver, a Network Driver Interface Specification NDIS protocol driver, a Network Driver Interface Specification NDIS intermediate driver, a Network Driver Interface Specification NDIS network interface card driver, and a client, where: the NDIS intermediate driver is configured to: intercept a packet sent by an application program on the client device to the intranet server, obtain a protocol type and a port number of the packet, determine according to the protocol type and the port number, and a mapping relationship from the TDI driver, a process identification, PID of a process corresponding to the packet, wherein the mapping relationship comprises the protocol type, the port number and the PID, and determine, according to the PID and a PID table of processes that are allowed to use the SSL VPN corresponding to the packet, whether to allow the process corresponding to the packet to use the SSL VPN, wherein the PID table comprises PIDs of processes that are allowed to use the SSL VPN; and
if the process corresponding to the packet is allowed to use the SSL VPN, establish a new packet, set a destination address of the new packet as a local address of the client device, set a destination port number of the new packet as a port number on which the client receives the packet, change a source Internet Protocol IP address of the packet to a virtual Internet Protocol IP address, use the packet as a payload of the new packet, and submit the new packet to the NDIS network interface card driver, where the virtual Internet Protocol IP address is a virtual Internet Protocol IP address obtained from the gateway after the client and the gateway establish a Secure Sockets Layer SSL tunnel;
and
the NDIS network interface card driver is configured to send the new packet to the client, so that the client sends the new packet to the intranet server.

With reference to the second aspect, in a first implementation manner of the second aspect, the TDI driver is configured to: obtain information about a packet flow for sending the packet, where the information includes the protocol type, the port number, and the process identification PID; and notify the NDIS intermediate driver of the information, so that the NDIS intermediate driver stores the mapping relationship . With reference to the second aspect, or the first implementation manner of the second aspect, in a third implementation manner of the second aspect, the client is configured to set, in the PID table, the PID indicating whether to allow the process corresponding to the packet to use the SSL VPN.

With reference to any one of the second aspect, and the first and second implementation manners of the second aspect, in a fourth implementation manner of the second aspect, the client is further configured to:
receive a packet from the intranet server that is forwarded by the gateway, change a destination address of the packet to the local address of the client device on which the client is located, and send the packet to the NDIS protocol driver by using a raw socket Raw Socket interface, so that the NDIS protocol driver forwards the packet to a corresponding application program.

According to the virtual private network implementation method and the client device in the embodiments of the present invention, an NDIS intermediate driver intercepts a packet sent by an application program to an intranet server, and determines, according to a process identification PID corresponding to the packet, whether to allow a process corresponding to the packet to use an SSL VPN. If the process corresponding to the packet is allowed to use the SSL VPN, the NDIS intermediate driver establishes a new packet, sets a destination address of the new packet as a local address of the client device on which the application program is located, sets a destination port number of the new packet as a port number by using which a client receives the packet, changes a source IP address of the original packet to a virtual IP address, uses the original packet as a payload of the new packet, and submits the new packet to an NDIS network interface card driver. The virtual IP address is a virtual IP address obtained from a gateway after the client and the gateway establish a Secure Sockets Layer SSL tunnel. The NDIS network interface card driver sends the new packet to the client, so that the client sends the new packet to the intranet server. Therefore, whether to allow the process to use the SSL VPN is determined according to the PID of the process, a virtual private network based on process control is implemented, and a startup speed of the client is obviously improved because a virtual network interface card is no more used.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a virtual private network implementation method according to an embodiment of the present invention;
FIG. 2 is a structural diagram of a network driver according to an embodiment of the present invention;
FIG. 3 is an architectural diagram of a network according to an embodiment of the present invention; and
FIG. 4 is a schematic structural diagram of a client device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

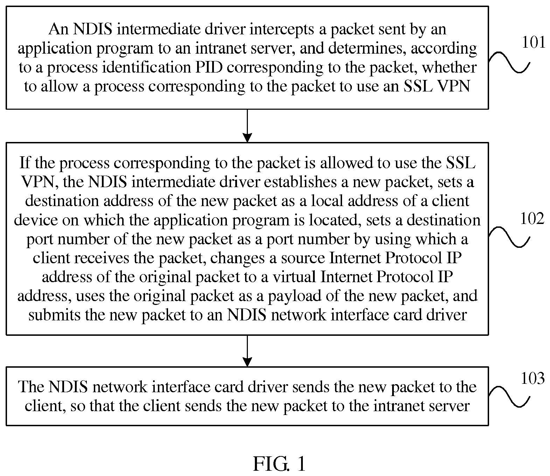

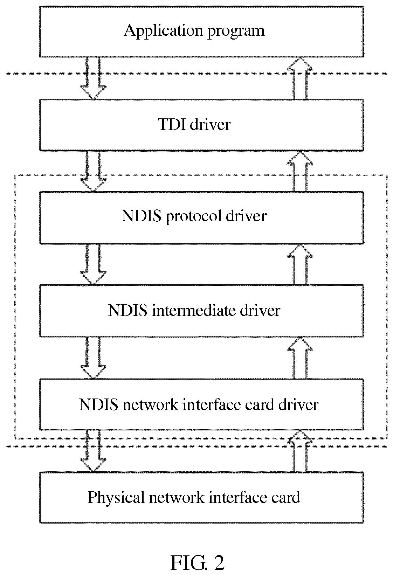

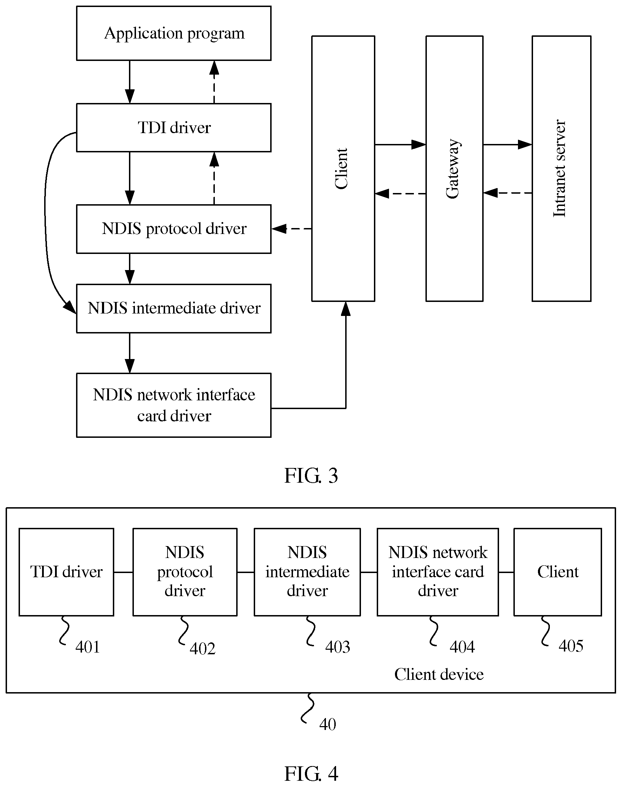

FIG. 1 is a flowchart of a virtual private network implementation method according to an embodiment of the present invention. FIG. 2 is a structural diagram of a network driver according to an embodiment of the present invention. FIG. 3 is an architectural diagram of a network according to an embodiment of the present invention. The method may be executed by a client device. As shown in FIG. 1, the method may be applied to a virtual private network over SSL VPN. The SSL VPN includes: a client device, a gateway, and an intranet server of the SSL VPN. The client device communicates with the intranet server by using the gateway. The client device includes a Transport Driver Interface (TDI) driver, a NDIS protocol driver, a NDIS intermediate driver, a NDIS network interface card driver, and a client. The method includes the following steps.

Step 101: The NDIS intermediate driver intercepts a packet sent by an application program to the intranet server, and determines, according to a process identification PID corresponding to the packet, whether to allow a process corresponding to the packet to use the SSL VPN.

Specifically, FIG. 2 shows a hierarchical structure of network drivers in a Windows operating system. In the embodiment of the present invention, the packet is intercepted by the NDIS intermediate driver. The network drivers in the Windows operating system include a TDI driver and a NDIS driver. The NDIS driver may be further divided into an NDIS protocol driver, an NDIS intermediate driver, and an NDIS network interface card driver. The NDIS protocol driver implements a specific network protocol (for example, tcpip.sys). The NDIS network interface card driver implements an operation on a physical network interface card. The NDIS intermediate driver is located between the NDIS network interface card driver and the NDIS protocol driver. The NDIS intermediate driver provides a miniport (Miniport) function set for an upper-layer driver, and provides a protocol (Protocol) function set for a lower-layer driver. Therefore, for an upper-layer driver, the NDIS intermediate driver is a miniport driver; and for a bottom-layer driver, the NDIS intermediate driver is a protocol driver.

The TDI driver can obtain process information of current communication, but the NDIS driver cannot obtain the process information of the current communication. As shown in FIG. 3, solid straight arrows in FIG. 3 indicate a data flow direction in which the application program sends a packet to the intranet server, and dashed straight arrows indicate a data flow direction in which the intranet server sends a packet to the application program. The application program on the client device sends the packet to the intranet server. The NDIS intermediate driver intercepts the packet, and determines, according to a process identification PID corresponding to the obtained packet, whether to allow a process corresponding to the packet to use the SSL VPN.

Step 102: If the process corresponding to the packet is allowed to use the SSL VPN, the NDIS intermediate driver establishes a new packet, sets a destination address of the new packet as a local address of the client device on which the application program is located, sets a destination port number of the new packet as a port number by using which the client receives the packet, changes a source Internet Protocol IP address of the original packet to a virtual Internet Protocol IP address, uses the original packet as a payload of the new packet, and submits the new packet to the NDIS network interface card driver.

The virtual Internet Protocol IP address is a virtual Internet Protocol IP address obtained from the gateway after the client and the gateway establish a Secure Sockets Layer SSL tunnel.

Specifically, if the NDIS intermediate driver determines that the process corresponding to the packet is allowed to use the SSL VPN, the NDIS intermediate driver establishes the new packet, sets the destination address of the new packet as the local address of the client device on which the application program is located, sets the destination port number of the new packet as the port number by using which the client receives the packet, calculates a new checksum, changes the source IP address of the original packet to the virtual IP address obtained from the gateway through application, uses the original packet as the payload of the new packet(copies the original packet into the new packet), and submits the new packet to the NDIS network interface card driver.

The NDIS intermediate driver needs to allocate a new block of memory to store the new packet. A length of the new packet is a length obtained by adding a length of the original packet to lengths of a UDP header and an IP header. The IP header includes the destination address and the checksum, and the UDP header includes the destination port number and the checksum. The original packet is used as the payload of the new packet, and is copied into the new packet. The UDP header and the IP header are filled in the new packet. Then, the new packet is submitted to a next-layer driver. In this way, the new packet including the original packet (includes a payload of the original packet, a TCP/UDP header of the original packet, and an IP header of the original packet) is sent to the client. The client receives the new packet, and directly forwards the new packet to the gateway.

For the foregoing virtual IP address, after the client is started, the client and the gateway establish the Secure Sockets Layer SSL tunnel, and the client obtains the virtual IP address.

Optionally, the method further includes:
if the process corresponding to the packet is not allowed to use the SSL VPN, directly submitting the packet to the NDIS network interface card driver.

Step 103: The NDIS network interface card driver sends the new packet to the client, so that the client sends the new packet to the intranet server.

Specifically, the NDIS network interface card driver sends the new packet to the client, and the client sends the new packet to the intranet server by using the gateway. If the process corresponding to the packet is not allowed to use the SSL VPN, the original packet is directly sent to the NDIS network interface card driver.

In this embodiment, an NDIS intermediate driver intercepts a packet sent by an application program to an intranet server, and determines, according to a process identification PID corresponding to the packet, whether to allow a process corresponding to the packet to use an SSL VPN. If the process corresponding to the packet is allowed to use the SSL VPN, the NDIS intermediate driver establishes a new packet, sets a destination address of the new packet as a local address of a client device on which the application program is located, sets a destination port number of the new packet as a port number by using which a client receives the packet, changes a source IP address of the original packet to a virtual IP address, uses the original packet as a payload of the new packet, and submits the new packet to an NDIS network interface card driver. The virtual IP address is a virtual IP address obtained from a gateway after the client and the gateway establish a Secure Sockets Layer SSL tunnel. The NDIS network interface card driver sends the new packet to the client, so that the client sends the new packet to the intranet server. Therefore, whether to allow the process to use the SSL VPN is determined according to the PID of the process, a virtual private network based on process control is implemented, and a startup speed of the client is obviously improved because a virtual network interface card is no more used. Thereby, user experience is improved.

The following describes in detail the technical solution in the method embodiment shown in FIG. 1 with reference to specific embodiments.

Before the NDIS intermediate driver establishes the new packet, the method further includes:
starting, by the client, a User Datagram Protocol (UDP) to receive a packet, and notifying the NDIS intermediate driver of a port number for receiving the packet and the virtual IP address.

Specifically, after the client is started, first, the client and the gateway establish the Secure Sockets Layer SSL tunnel, and the client obtains the virtual IP address. The client starts a UDP to receive a forwarded packet, notifies the NDIS intermediate driver of the port number for receiving the packet and the virtual IP address by using DeviceIoControl. Then, the application program initiates establishment of a connection to the intranet server, or sends a first UDP packet.

The client may communicate with the NDIS intermediate driver by using the DeviceIoControl.

Optionally, the determining, according to a process identification PID corresponding to the packet, whether to allow a process corresponding to the packet to use the SSL VPN includes:
obtaining a protocol type and a port number of the packet, determining, according to a mapping relationship between a protocol type and a port number, and a process identification PID, the PID corresponding to the packet, and determining, according to the PID, whether to allow the process corresponding to the PID to use the SSL VPN.

Optionally, before the NDIS intermediate driver intercepts the packet sent by the application program to the intranet server, the method further includes:
obtaining, by the TDI driver, information about a packet flow for sending the packet, where the information includes the protocol type, the port number, and the process identification PID; notifying the NDIS intermediate driver of the information; and storing, by the NDIS intermediate driver, the mapping relationship between the information.

Specifically, in the embodiment of the present invention, the NDIS intermediate driver completes determining, according to the PID of the process, whether to allow the process to use the SSL VPN. However, the NDIS intermediate driver does not have a capability of identifying a process that sends the packet, but the TDI driver has the capability. A flow table of a mapping relationship between a protocol type and a port number, and a process identification PID may be maintained in the NDIS intermediate driver to implement the capability. Each record in the flow table represents a mapping relationship. The NDIS intermediate driver determines, according to content of the flow table, whether to allow the process corresponding to the intercepted packet to use the SSL VPN. The TDI driver is responsible for intercepting an action of creating or deleting a packet flow for sending the packet, and is responsible for sending information about the packet flow (a PID, a protocol type, and a port number for establishing the packet flow) to the NDIS intermediate driver. A solid curved arrow shown in FIG. 3 indicates a packet flow direction from the TDI driver to the NDIS intermediate driver. The NDIS intermediate driver maintains the flow table, and performs addition or deletion on the flow table according to a notification from the TDI driver.

**Table 1**

| **PID** | **Protocol Type** | **Port Number** |
|---|---|---|
| 765 | UDP | 5693 |
| 865 | TCP | 8790 |
| 259 | TCP | 6666 |
| 543 | UDP | 34555 |

Each record in Table 1 includes the PID, the protocol type, and the port number for creating the packet flow. When the application program and the intranet server establish a new TCP connection (or when a first UDP packet is sent), the TDI driver intercepts the action, obtains a PID, a protocol type, and a port number of a currently initiated packet flow, and notifies the NDIS intermediate driver by using DeviceIoControl. The NDIS intermediate driver adds a record into Table 1 according to received content. When determining, according to the protocol type and the port number of the packet, the PID of the process corresponding to the packet, the NDIS intermediate driver uses the table to perform determining.

When a packet passes the NDIS intermediate driver, the NDIS intermediate driver obtains a protocol type and a port number of the packet from the packet, searches Table 1 according to the protocol type and the port number for a PID of a process that sends the packet, and may further search, for the PID, a PID table of processes that are allowed to use the SSL VPN. If the PID is found in the PID table, the process corresponding to the packet is allowed to use the SSL VPN.

Optionally, before the determining, according to a process identification PID corresponding to the packet, whether to allow a process corresponding to the packet to use the SSL VPN, the method further includes:
setting, in the NDIS intermediate driver by the client, a process identification PID indicating whether to allow the process corresponding to the packet to use the SSL VPN.

Specifically, the NDIS intermediate driver may further maintain the PID table of the processes that are allowed to use the SSL VPN, and may record process PIDs of the processes that are allowed to use the SSL VPN. The NDIS intermediate driver provides, by using DeviceIoControl, an interface for the SSL VPN client to use. A user may use the client to add or delete a PID of a process that is allowed to use the SSL VPN into or from the table maintained in the NDIS intermediate driver. The NDIS intermediate driver uses the table when determining whether to allow a process corresponding to a packet to use the SSL VPN. If a PID of the process that sends the packet is found in the table, it indicates that the process corresponding to the packet is allowed to use the SSL VPN.

The PID table of the processes that are allowed to use the SSL VPN is controlled. Therefore, it can be implemented that only an application program running in a security sandbox is allowed to access the intranet server.

The PID table of the processes that are allowed to use the SSL VPN is expanded. Therefore, it can be implemented that multiple clients are corresponding to one PID table of processes that are allowed to use the SSL VPN, and that multiple clients use at the same time the PID table of the processes that are allowed to use the SSL VPN.

In this embodiment of the present invention, control of using the SSL VPN is improved to a process-level control granularity thanks to change of a packet interception location and cooperation with the TDI driver. In addition, a virtual network interface card is no more needed to be used in an operating system of the client device. Therefore, a startup speed of the client is obviously improved, so that user experience of a product is improved.

Optionally, the method in this embodiment further includes:
when the application program closes a packet flow established by the application program and the intranet server, obtaining, by the TDI driver, a protocol type, a port number, and a process identification PID of the currently closed packet flow, notifying the NDIS intermediate driver, and deleting, by the NDIS intermediate driver, the stored mapping relationship between the PID, a protocol type, and a port number.

For example, when the application program closes a TCP connection, the TDI driver intercepts the action, obtains a PID, a protocol type, and a port number of a process corresponding to the currently closed connection, and notifies the NDIS intermediate driver by using DeviceIoControl. The NDIS intermediate driver searches Table 1 for a corresponding record, and deletes the found record from Table 1.

Optionally, as shown in FIG. 3, that the NDIS network interface card driver sends the new packet to the client, so that the client sends the new packet to the intranet server includes:
sending, by the client, the new packet to the gateway by using the SSL tunnel, and forwarding, by the gateway, the new packet to the intranet server.

Optionally, the method further includes:
receiving, by the client, a packet from the intranet server that is forwarded by the gateway, changing a destination address of the packet to the local address of the client device on which the client is located, sending the packet to the NDIS protocol driver by using a raw socket Raw Socket interface, and forwarding, by the NDIS protocol driver, the packet to a corresponding application program.

Specifically, as shown in FIG. 3, when the client receives, from the SSL tunnel, the packet that is sent by the intranet server to the application program and that is forwarded by the gateway, the client checks a checksum of the packet. If the check succeeds, the client changes the destination address of the packet to the local address, recalculates a checksum, and sends the packet to the NDIS protocol driver by using the Raw Socket interface, so that the NDIS protocol driver directly sends the packet to an application program of the client device. The NDIS protocol driver may submit the packet to a proper application program according to content of the packet.

An implementation principle and a technical effect of this embodiment are similar to those of the first method embodiment, and details are not described herein again.

FIG. 4 is a schematic structural diagram of a client device according to a first device embodiment of the present invention. As shown in FIG. 4, the client device 40 in this embodiment is applied to a virtual private network over Secure Sockets Layer SSL VPN. The SSL VPN includes: a client device 40, a gateway, and an intranet server of the SSL VPN. The client device communicates with the intranet server by using the gateway. The client device 40 includes a TDI driver 401, an NDIS protocol driver 402, an NDIS intermediate driver 403, an NDIS network interface card driver 404, and a client 405.

The NDIS intermediate driver 403 is configured to: intercept a packet sent by an application program to the intranet server; determine, according to a process identification PID corresponding to the packet, whether to allow a process corresponding to the packet to use the SSL VPN; if the process corresponding to the packet is allowed to use the SSL VPN, establish a new packet; set a destination address of the new packet as a local address of the client device on which the application program is located; set a destination port number of the new packet as a port number by using which the client 405 receives the packet; change a source Internet Protocol IP address of the original packet to a virtual Internet Protocol IP address; use the original packet as a payload of the new packet; and submit the new packet to the NDIS network interface card driver 404. The virtual Internet Protocol IP address is a virtual Internet Protocol IP address obtained from the gateway after the client 405 and the gateway establish a Secure Sockets Layer SSL tunnel.

The NDIS network interface card driver 404 is configured to send the new packet to the client 405, so that the client 405 sends the new packet to the intranet server. Optionally, the NDIS intermediate driver 403 is specifically configured to:
obtain a protocol type and a port number of the packet, determine, according to a mapping relationship between a protocol type and a port number, and a process identification PID, the PID corresponding to the packet, and determine, according to the PID, whether to allow the process corresponding to the PID to use the SSL VPN.

Optionally, the TDI driver 401 is configured to: obtain information about a packet flow for sending the packet, where the information includes the protocol type, the port number, and the process identification PID; and notify the NDIS intermediate driver 403 of the information, so that the NDIS intermediate driver 403 stores the mapping relationship between the information.

Optionally, the client 405 is configured to set, in the NDIS intermediate driver 403, a process identification PID indicating whether to allow the process corresponding to the packet to use the SSL VPN.

Optionally, the client 405 is further configured to:
receive a packet from the intranet server that is forwarded by the gateway, change a destination address of the packet to the local address of the client device on which the client 405 is located, and send the packet to the NDIS protocol driver 402 by using a raw socket Raw Socket interface, so that the NDIS protocol driver 402 forwards the packet to a corresponding application program.

In the several embodiments provided in the present application, it should be understood that the disclosed device and method may be implemented in other manners. For example, the described device embodiment is merely exemplary. For example, the unit or module division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one position, or may be distributed on a plurality of network units. Some or all of the modules may be selected according to actual needs to achieve the objectives of the solutions of the embodiments.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A virtual private network implementation method, wherein the method is applied to a virtual private network over Secure Sockets Layer, SSL VPN, the SSL VPN comprises: a client device, a gateway, and an intranet server of the SSL VPN, the client device communicates with the intranet server by using the gateway, the client device comprises a Transport Driver Interface, TDI, driver, a Network Driver Interface Specification, NDIS, protocol driver, a NDIS intermediate driver, a NDIS network interface card driver, and a client, and the method comprises:
Intercepting (101), by the NDIS intermediate driver, a packet sent by an application program on the client device to the intranet server, obtaining a protocol type and a port number of the packet, determining according to the protocol type and the port number, and a mapping relationship from the TDI driver, a process identification, PID, of a process corresponding to the packet,
wherein the mapping relationship comprises the protocol type, the port number and the PID, and determining, according to the PID and a PID table of processes that are allowed to use the SSL VPN, whether to allow the process corresponding to the packet to use the SSL VPN, wherein the PID table comprises PIDs of processes that are allowed to use the SSL VPN;
if the process corresponding to the packet is allowed to use the SSL VPN, establishing (102), by the NDIS intermediate driver, a new packet, setting a destination address of the new packet as a local address of the client device , setting a destination port number of the new packet as a port number on which the client receives the packet, changing a source Internet Protocol, IP, address of the packet to a virtual IP address, using the packet as a payload of the new packet, and submitting the new packet to the NDIS network interface card driver, wherein the virtual IP address is a virtual IP address obtained from the gateway after the client and the gateway establish a Secure Sockets Layer, SSL, tunnel; and
sending (103), by the NDIS network interface card driver, the new packet to the client, and sending, by the client, the new packet to the intranet server.

2. The method according to claim 1, wherein before the intercepting, by the NDIS intermediate driver, a packet sent by an application program to the intranet server, the method further comprises:
obtaining, by the TDI driver, information about a packet flow for sending the packet, wherein the information comprises the protocol type, the port number, and the PID; notifying the NDIS intermediate driver of the information; and
storing, by the NDIS intermediate driver, the mapping relationship.

3. The method according to claim 1 or 2, wherein before the determining whether to allow a process corresponding to the packet to use the SSL VPN, the method further comprises:
setting, in the PID table by the client, the PID to allow the process corresponding to the packet to use the SSL VPN.

4. The method according to any one of claims 1 to 3, wherein the method further comprises:
receiving, by the client, a packet from the intranet server that is forwarded by the gateway, changing a destination address of the packet to the local address of the client device on which the client is located, sending the packet to the NDIS protocol driver by using a raw socket interface, and forwarding, by the NDIS protocol driver, the packet to a corresponding application program.

5. A client device (40), applied to a virtual private network over Secure Sockets Layer, SSL VPN, wherein the SSL VPN comprises: the client device (40), a gateway, and an intranet server of the SSL VPN, the client device communicates with the intranet server by using the gateway, and the client device (40) comprises a Transport Driver Interface, TDI, driver (401), a Network Driver Interface Specification, NDIS, protocol driver (402), a NDIS intermediate driver (403), a NDIS network interface card driver (404), and a client (405), wherein:
the NDIS intermediate driver (403) is configured to: intercept a packet sent by an application program on the client device to the intranet server, obtain a protocol type and a port number of the packet, determine according to the protocol type and the port number, and a mapping relationship from the TDI driver, a process identification, PID, of a process corresponding to the packet,
wherein the mapping relationship comprises the protocol type, the port number and the PID, and determine, according to the PID and a PID table of processes that are allowed to use the SSL VPN, whether to allow the process corresponding to the packet to use the SSL VPN, wherein the PID table comprises PIDs of processes that are allowed to use the SSL VPN; and
if the process corresponding to the packet is allowed to use the SSL VPN, establish a new packet, set a destination address of the new packet as a local address of the client device, set a destination port number of the new packet as a port number on which the client receives the packet, change a source Internet Protocol, IP, address of the packet to a virtual IP address, use the packet as a payload of the new packet, and submit the new packet to the NDIS network interface card driver, wherein the virtual IP address is a virtual IP address obtained from the gateway after the client and the gateway establish a Secure Sockets Layer, SSL, tunnel; and
the NDIS network interface card driver (404)is configured to send the new packet to the client, so that the client sends the new packet to the intranet server.

6. The device according to claim 5, wherein the TDI driver is configured to: obtain information about a packet flow for sending the packet, wherein the information comprises the protocol type, the port number, and the PID; and notify the NDIS intermediate driver of the information, so that the NDIS intermediate driver stores the mapping relationship.

7. The device according to claim 5 or 6, wherein the client is configured to set, in the PID table, the PID to allow the process corresponding to the packet to use the SSL VPN.

8. The device according to any one of claims 5 to 7, wherein the client is further configured to:
receive a packet, from the intranet, server that is forwarded by the gateway, change a destination address of the packet to the local address of the client device on which the client is located, and send the packet to the NDIS protocol driver by using a raw socket interface, so that the NDIS protocol driver forwards the packet to a corresponding application program.

9. A virtual private network over Secure Sockets Layer (SSL VPN), comprising a client device according to any one of the claims 5 to 8, a gateway, and an intranet server of the SSL VPN, wherein the client device communicates with the intranet server by using the gateway.

## Patentansprüche

1. Verfahren zum Umsetzen eines virtuellen privaten Netzwerks, wobei das Verfahren auf ein virtuelles privates Netzwerk mit einer "Secure Sockets Layer", SSL-VPN, angewandt wird, wobei das SSL-VPN umfasst: eine Client-Vorrichtung, ein Gateway, und einen Intranet-Server des SSL-VPN, wobei die Client-Vorrichtung mithilfe des Gateways mit dem Intranet-Server kommuniziert, wobei die Client-Vorrichtung einen Treiber einer Transporttreiberschnittstelle (Transport Driver Interface driver, TDI-Treiber), einen Protokolltreiber einer Netzwerktreiberschnittstellenspezifikation (Network Driver Interface Specification protocol driver, NDIS-Protokolltreiber), einen NDIS-Zwischentreiber, einen NDIS-Netzwerkschnittstellenkartentreiber und einen Client umfasst, und wobei das Verfahren umfasst:
Abfangen (101), durch den NDIS-Zwischentreiber, eines Datenpakets, das von einem Anwendungsprogramm in der Client-Vorrichtung an den Intranet-Server gesendet wird, Erhalten eines Protokolltyps und einer Anschlussnummer des Datenpakets,
Ermitteln gemäß dem Protokolltyp und der Anschlussnummer und gemäß einer Abbildungsbeziehung von dem TDI-Treiber, einer Prozesskennung (Process Identification, PID) eines Prozesses, der dem Datenpaket entspricht, wobei die Abbildungsbeziehung den Protokolltyp, die Anschlussnummer und die PID umfasst, und Ermitteln, gemäß der PID und einer PID-Tabelle von Prozessen, denen es erlaubt ist, das SSL-VPN zu verwenden, ob dem Prozess, der dem Datenpaket entspricht, erlaubt wird, das SSL-VPN zu verwenden, wobei die PID-Tabelle PIDs der Prozesse umfasst, denen es erlaubt ist, das SSL-VPN zu verwenden; wenn dem Prozess, der dem Datenpaket entspricht, erlaubt ist, das SSL-VPN zu verwenden, Einrichten (102) eines neuen Datenpakets durch den NDIS-Zwischentreiber, Einstellen einer Zieladresse des neuen Datenpakets als eine lokale Adresse der Client-Vorrichtung,
Einstellen einer Zielanschlussnummer des neuen Datenpakets als eine Anschlussnummer, unter welcher der Client das Datenpaket empfängt, Ändern einer Herkunfts-Internetprotokolladresse (Source Internet Protocol address, Herkunfts-IP-Adresse) des Datenpakets in eine virtuelle IP-Adresse, Verwenden des Datenpakets als Nutzdaten des neuen Datenpakets, und Übermitteln des neuen Datenpakets an den NDIS-Netzwerkschnittstellenkartentreiber, wobei die virtuelle IP-Adresse eine virtuelle IP-Adresse ist, die von dem Gateway erhalten wird, nachdem der Client und das Gateway einen "Secure Sockets Layer"-Datentunnel, SSL-Datentunnel, eingerichtet haben; und
Senden des neuen Datenpakets von dem NDIS-Netzwerkschnittstellenkartentreiber an den Client und Senden des neuen Datenpakets von dem Client an den Intranet-Server.

2. Verfahren nach Anspruch 1, wobei das Verfahren, vor dem Abfangen, durch den NDIS-Zwischentreiber, eines Datenpakets, das von einem Anwendungsprogramm an den Intranet-Server gesendet wird, außerdem umfasst:
Erhalten, in dem TDI-Treiber, von Informationen über einen Datenpaketfluss zum Senden des Datenpakets, wobei die Informationen, den Protokolltyp, die Anschlussnummer und die PID umfassen; Melden der Informationen an den NDIS-Zwischentreiber; und Speichern der Abbildungsbeziehung durch den NDIS-Zwischentreiber.

3. Verfahren nach Anspruch 1 oder 2, wobei das Verfahren, vor dem Ermitteln, ob einem Prozess, der dem Datenpaket entspricht, erlaubt wird das SSL-VPN zu verwenden, außerdem umfasst:
Einstellen, durch den Client, der PID in der PID-Tabelle, um dem Prozess, der dem Datenpaket entspricht, zu erlauben, das SSL-VPN zu verwenden.

4. Verfahren nach einem der Ansprüche 1 bis 3, wobei das Verfahren außerdem umfasst:
Empfangen in dem Client eines Datenpakets von dem Intranet-Server, das von dem Gateway weitergeleitet wird, Ändern einer Zieladresse des Datenpakets in die lokale Adresse der Client-Vorrichtung, an der sich der Client befindet, Senden des Datenpakets an den NDIS-Protokolltreiber, indem eine Raw-Socket-Schnittstelle verwendet wird, und Weiterleiten des Datenpakets durch den NDIS-Protokolltreiber an ein entsprechendes Anwendungsprogramm.

5. Client-Vorrichtung (40), die in einem virtuellen privaten Netzwerk mit einer "Secure Sockets Layer", SSL-VPN, angewandt wird, wobei das SSL-VPN umfasst: die Client-Vorrichtung (40), ein Gateway und einen Intranet-Server des SSL-VPN, wobei die Client-Vorrichtung mithilfe des Gateways mit dem Intranet-Server kommuniziert und wobei die Client-Vorrichtung (40) einen Treiber einer Transporttreiberschnittstelle (Transport Driver Interface driver, TDI-Treiber) (401), einen Protokolltreiber einer Netzwerktreiberschnittstellenspezifikation (Network Driver Interface Specification protocol driver, NDIS-Protokolltreiber) (402), einen NDIS-Zwischentreiber (403), einen NDIS-Netzwerkschnittstellenkartentreiber (404) und einen Client (405) umfasst, wobei: der NDIS-Zwischentreiber (403) konfiguriert ist zum: Abfangen eines Datenpakets, das von einem Anwendungsprogramm in der Client-Vorrichtung an den Intranet-Server gesendet wird, Erhalten eines Protokolltyps und einer Anschlussnummer des Datenpakets, Ermitteln gemäß dem Protokolltyp und der Anschlussnummer und gemäß einer Abbildungsbeziehung von dem TDI-Treiber, einer Prozesskennung (Process Identification, PID) eines Prozesses, der dem Datenpaket entspricht, wobei die Abbildungsbeziehung den Protokolltyp, die Anschlussnummer und die PID umfasst, und Ermitteln, gemäß der PID und einer PID-Tabelle von Prozessen, denen es erlaubt ist, das SSL-VPN zu verwenden, ob dem Prozess, der dem Datenpaket entspricht, erlaubt wird, das SSL-VPN zu verwenden, wobei die PID-Tabelle PIDs der Prozesse umfasst, denen es erlaubt ist, das SSL-VPN zu verwenden; und wenn dem Prozess, der dem Datenpaket entspricht, erlaubt ist, das SSL-VPN zu verwenden, Einrichten eines neuen Datenpakets, Einstellen einer Zieladresse des neuen Datenpakets als eine lokale Adresse der Client-Vorrichtung, Einstellen einer Zielanschlussnummer des neuen Datenpakets als eine Anschlussnummer, unter welcher der Client das Datenpaket empfängt, Ändern einer Herkunfts-Internetprotokolladresse (Source Internet Protocol address, Herkunfts-IP-Adresse) des Datenpakets in eine virtuelle IP-Adresse, Verwenden des Datenpakets als Nutzdaten des neuen Datenpakets, und Übermitteln des neuen Datenpakets an den NDIS-Netzwerkschnittstellenkartentreiber, wobei die virtuelle IP-Adresse eine virtuelle IP-Adresse ist, die von dem Gateway erhalten wird, nachdem der Client und das Gateway einen "Secure Sockets Layer"-Datentunnel, SSL-Datentunnel, eingerichtet haben; und
wobei der NDIS-Netzwerkschnittstellenkartentreiber (404) konfiguriert ist zum Senden des neuen Datenpakets an den Client, sodass der Client das neue Datenpaket an den Intranet-Server sendet.

6. Vorrichtung nach Anspruch 5, wobei der TDI-Treiber konfiguriert ist zum: Erhalten von Informationen über einen Datenpaketfluss zum Senden des Datenpakets, wobei die Informationen den Protokolltyp, die Anschlussnummer und die PID umfassen, und Melden der Informationen an den NDIS-Zwischentreiber, sodass der NDIS-Zwischentreiber die Abbildungsbeziehung speichert.

7. Vorrichtung nach Anspruch 5 oder 6, wobei der Client konfiguriert ist zum Einstellen der PID in der PID-Tabelle, um dem Prozess, der dem Datenpaket entspricht, zu erlauben, das SSL-VPN zu verwenden.

8. Vorrichtung nach einem der Ansprüche 5 bis 7, wobei der Client außerdem konfiguriert ist zum:
Empfangen eines Datenpakets von dem Intranet-Server, das von dem Gateway weitergeleitet wird, Ändern einer Zieladresse des Datenpakets in die lokale Adresse der Client-Vorrichtung, an der sich der Client befindet, und Senden des Datenpakets an den NDIS-Protokolltreiber, indem eine "Raw Socket"-Schnittstelle verwendet wird, sodass der NDIS-Protokolltreiber das Datenpaket an ein entsprechendes Anwendungsprogramm weiterleitet.

9. Virtuelles privates Netzwerk mit einer "Secure Sockets Layer" (SSL-VPN), das eine Client-Vorrichtung nach einem der Ansprüche 5 bis 8, ein Gateway und einen Intranet-Server des SSL-VPN umfasst, wobei die Client-Vorrichtung mithilfe des Gateways mit dem Intranet-Server kommuniziert.

## Revendications

1. Procédé de mise en œuvre de réseau privé virtuel, le procédé étant appliqué à un réseau privé virtuel sur couche de socket sécurisée (VPN SSL), le VPN SSL comprenant : un dispositif client, une passerelle et un serveur intranet du VPN SSL, le dispositif client communiquant avec le serveur intranet au moyen de la passerelle, le dispositif client comprenant un pilote d'interface pilote de transport (TDI), un pilote de protocole de spécification d'interface pilote de réseau (NDIS), un pilote intermédiaire NDIS, un pilote de carte d'interface de réseau NDIS et un client, et le procédé consistant à :
intercepter (101), par le pilote intermédiaire NDIS, un paquet envoyé par un programme d'application sur le dispositif client au serveur intranet, obtenir un type de protocole et un numéro de port du paquet, déterminer selon le type de protocole et le numéro de port et selon une relation de correspondance du pilote TDI, une identification de processus (PID) d'un processus correspondant au paquet, la relation de correspondance comprenant le type de protocole, le numéro de port et la PID, et
déterminer, selon la PID et une table PID de processus qui sont autorisés à utiliser le VPN SSL, s'il faut autoriser le processus correspondant au paquet à utiliser le VPN SSL, la table PID comprenant des PID de processus qui sont autorisés à utiliser le VPN SSL ;
si le processus correspondant au paquet est autorisé à utiliser le VPN SSL, établir (102), par le pilote intermédiaire NDIS, un nouveau paquet, définir une adresse de destination du nouveau paquet en tant qu'adresse locale du dispositif client, définir un numéro de port de destination du nouveau paquet en tant que numéro de port sur lequel le client reçoit le paquet, changer une adresse sur protocole Internet (IP) source du paquet pour une adresse IP virtuelle, utiliser le paquet en tant que charge utile du nouveau paquet, et envoyer le nouveau paquet au pilote de carte d'interface de réseau NDIS, l'adresse IP virtuelle étant une adresse IP virtuelle obtenue de la passerelle après l'établissement, par le client et la passerelle, d'un tunnel sur couche de socket sécurisée (SSL) ; et
envoyer (103), par le pilote de carte d'interface de réseau NDIS, le nouveau paquet au client, et envoyer, par le client, le nouveau paquet au serveur intranet.

2. Procédé selon la revendication 1, le procédé consistant en outre, avant l'interception, par le pilote intermédiaire NDIS, d'un paquet envoyé par un programme d'application au serveur intranet, à :
obtenir, par le pilote TDI, une information sur un flux de paquets pour envoyer le paquet, l'information comprenant le type de protocole, le numéro de port et la PID ;
notifier l'information au pilote intermédiaire NDIS ; et stocker, par le pilote intermédiaire NDIS, la relation de correspondance.

3. Procédé selon la revendication 1 ou 2, le procédé consistant en outre, avant la détermination permettant de savoir s'il faut autoriser un processus correspondant au paquet à utiliser le VPN SSL, à :
définir, dans la table PID, par le client, la PID pour autoriser le processus correspondant au paquet à utiliser le VPN SSL.

4. Procédé selon l'une quelconque des revendications 1 à 3, le procédé consistant en outre à :
recevoir, par le client, un paquet en provenance du serveur intranet, qui est transféré par la passerelle ; changer une adresse de destination du paquet pour l'adresse locale du dispositif client où se trouve le client ; envoyer le paquet au pilote de protocole NDIS au moyen d'une interface de socket brute ; et transférer, par le pilote de protocole NDIS, le paquet à un programme d'application correspondant.

5. Dispositif client (40) appliqué à un réseau privé virtuel sur couche de socket sécurisée (VPN SSL), le VPN SSL comprenant : le dispositif client (40), une passerelle et un serveur intranet du VPN SSL, le dispositif client communiquant avec le serveur intranet au moyen de la passerelle, et le dispositif client (40) comprenant un pilote d'interface pilote de transport (TDI) (401), un pilote de protocole de spécification d'interface pilote de réseau (NDIS) (402), un pilote intermédiaire NDIS (403), un pilote de carte d'interface de réseau NDIS (404) et un client (405), le pilote intermédiaire NDIS (403) étant configuré pour : intercepter un paquet envoyé par un programme d'application sur le dispositif client au serveur intranet ; obtenir un type de protocole et un numéro de port du paquet ; déterminer selon le type de protocole et le numéro de port et selon une relation de correspondance du pilote TDI, une identification de processus (PID) d'un processus correspondant au paquet, la relation de correspondance comprenant le type de protocole, le numéro de port et la PID ; et déterminer, selon la PID et une table PID de processus qui sont autorisés à utiliser le VPN SSL, s'il faut autoriser le processus correspondant au paquet à utiliser le VPN SSL, la table PID comprenant des PID de processus qui sont autorisés à utiliser le VPN SSL ; et si le processus correspondant au paquet est autorisé à utiliser le VPN SSL, établir un nouveau paquet ; définir une adresse de destination du nouveau paquet en tant qu'adresse locale du dispositif client ; définir un numéro de port de destination du nouveau paquet en tant que numéro de port sur lequel le client reçoit le paquet ; changer une adresse sur protocole Internet (IP) source du paquet pour une adresse IP virtuelle ; utiliser le paquet en tant que charge utile du nouveau paquet ; et envoyer le nouveau paquet au pilote de carte d'interface de réseau NDIS, l'adresse IP virtuelle étant une adresse IP virtuelle obtenue de la passerelle après l'établissement, par le client et la passerelle, d'un tunnel sur couche de socket sécurisée (SSL) ; et
le pilote de carte d'interface de réseau NDIS (404) étant configuré pour envoyer le nouveau paquet au client, de sorte que le client envoie le nouveau paquet au serveur intranet.

6. Dispositif selon la revendication 5, dans lequel le pilote TDI est configuré pour obtenir une information sur un flux de paquets pour envoyer le paquet, l'information comprenant le type de protocole, le numéro de port et la PID ; et notifier l'information au pilote intermédiaire NDIS, de sorte que le pilote intermédiaire NDIS stocke la relation de correspondance.

7. Dispositif selon la revendication 5 ou 6, dans lequel le client est configuré pour définir, dans la table PID, la PID pour autoriser le processus correspondant au paquet à utiliser le VPN SSL.

8. Dispositif selon l'une quelconque des revendications 5 à 7, dans lequel le client est en outre configuré pour :
recevoir un paquet, en provenance du serveur intranet, qui est transféré par la passerelle ; changer une adresse de destination du paquet pour l'adresse locale du dispositif client où se trouve le client ; et envoyer le paquet au pilote de protocole NDIS au moyen d'une interface de socket brute, de sorte que le pilote de protocole NDIS transfère le paquet à un programme d'application correspondant.

9. Réseau privé virtuel sur couche de socket sécurisée (VPN SSL), comprenant un dispositif client selon l'une quelconque des revendications 5 à 8, une passerelle et un serveur intranet du VPN SSL, le dispositif client communiquant avec le serveur intranet au moyen de la passerelle.
